(19) Europäisches Patentamt
European Patent Office
Office européen des brevets

(11) **EP 3 699 767 B1**

(12) **EUROPEAN PATENT SPECIFICATION**

(45) Date of publication and mention
of the grant of the patent:
**19.02.2025 Bulletin 2025/08**

(21) Application number: **19158480.4**

(22) Date of filing: **21.02.2019**

(51) International Patent Classification (IPC):
**G06F 13/16** (2006.01)

(52) Cooperative Patent Classification (CPC):
**G06F 13/1673**

(54) **DEVICE AND METHOD OF HANDLING A TIME DE-INTERLEAVER BLOCK**

VORRICHTUNG UND VERFAHREN ZUR HANDHABUNG EINES
ZEITENTSCHACHTELERBLOCKS

DISPOSITIF ET PROCÉDÉ DE GESTION D'UN BLOC DE DÉSENTRELACEMENT TEMPOREL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.08.2020 Bulletin 2020/35**

(73) Proprietor: **Realtek Semiconductor Corp.**
**30076 HsinChu (TW)**

(72) Inventor: **Shie, Yi-Lin**
**830 Kaohsiung City (TW)**

(74) Representative: **Straus, Alexander et al**
**2K Patent- und Rechtsanwälte**
**Bajuwarenring 14**
**82041 Oberhaching (DE)**

(56) References cited:
EP-A1- 0 856 949      US-A1- 2005 063 421
US-A1- 2009 180 034   US-A1- 2009 300 300
US-A1- 2010 197 302   US-A1- 2011 113 305

**Description**

Field of the Invention

The present invention relates to a communication device and a method of handling a time de-interleaver block in a wireless communication system.

Background of the Invention

In a wireless communication system, a receiver (e.g., a user equipment (UE)) may obtain information in a time de-interleaver (TDI) block by using a double data rate (DDR) reading/writing (R/W) with the TDI. However, when using the TDI R/W, the TDI repeatedly reads information. The receiver unnecessarily consumes in a large amount of resources. Thus, how to reduce the resource consumption is an important problem to be solved.

US 2011/113305 A1 discloses the systems and the methods for performing high-speed multi-channel forward error correction using external DDR synchronous dynamic random access memory (DDR SDRAM). An interleaver/-deinterleaver performs both reading and writing accesses to the DDR SDRAM that are burst-oriented by hiding active and precharge cycles in order to achieve high data rate operations.

However, the reference does not disclose the problem to be solved in the present invention.

Summary of the Invention

The present invention therefore provides a communication device for handling a time de-interleaver (TDI) block to solve the abovementioned problem.

This is achieved by a TDI for handling a TDI block according to the independent claims here below. The dependent claims pertain to corresponding further developments and improvements.

Brief Description of the Drawings

Fig. 1 is a schematic diagram of a communication system according to an example of the present invention.
Fig. 2 is a schematic diagram of a time de-interleaver according to an example of the present invention.
Fig. 3 is a schematic diagram of a time de-interleaver block and a double data rate storage device according to an example of the present invention.
Fig. 4 is a flowchart of a process according to an example of the present invention.
Fig. 5 is a schematic diagram of a time de-interleaver according to an example of the present invention.
Fig. 6 is a flowchart of a process according to an example of the present invention.

Detailed Description

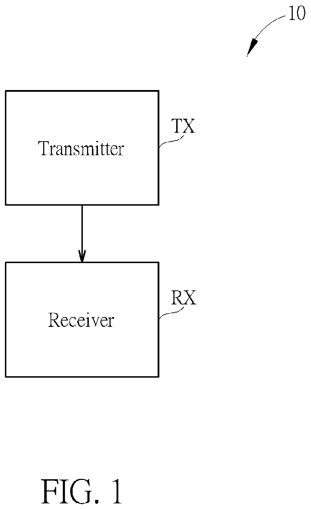

Fig. 1 is a schematic diagram of a communication system 10 according to an example of the present invention. The communication system 10 may be any communication system using an orthogonal frequency-division multiplexing (OFDM) technique (or termed as discrete multi-tone modulation (DMT) technique), and is briefly composed of a transmitter TX and a receiver RX. In Fig. 1, the transmitter TX and the receiver RX are simply utilized for illustrating the structure of the communication system 10. For example, the communication system 10 may be any wired communication system such as an asymmetric digital subscriber line (ADSL) system, a power line communication (PLC) system or an Ethernet over coax (EOC), or may be any wireless communication system such as a wireless local area network (WLAN), a Digital Video Broadcasting (DVB) system, a Long Term Evolution (LTE) system, a Long Term Evolution-advanced (LTE-A) system or a fifth generation (5G) system. In addition, the transmitter TX and the receiver RX may be installed in a mobile phone, a laptop, etc., but is not limited herein.

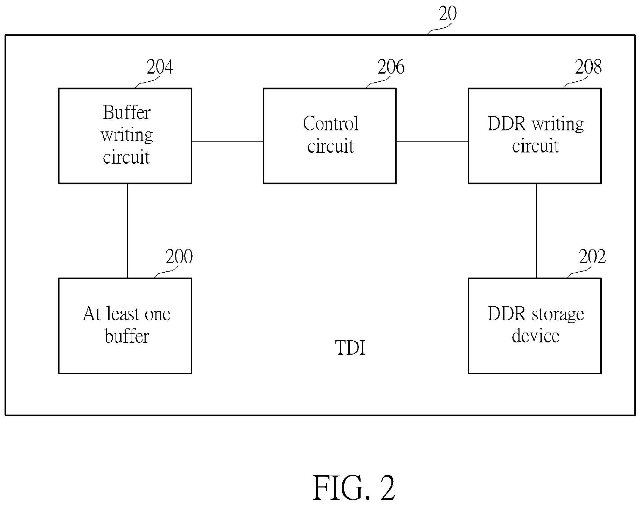

Fig. 2 is a schematic diagram of a time de-interleaver (TDI) 20 according to the present invention. The TDI 20 may be utilized in the receiver RX of Fig. 1, for handling a TDI block transmitted by the transmitter TX. The TDI 20 includes at least one buffer 200, a double data rate (DDR) storage device 202, a buffer writing circuit 204, a control circuit 206 and a DDR writing circuit 208. In detail, the buffer writing circuit 204 is coupled to the at least one buffer 200, and writes (e.g., stores) data cells in the TDI block to the at least one buffer 200. The control circuit 206 is coupled to the buffer writing circuit 204, and generates DDR addresses of the data cells according to TDI addresses of the data cells. The DDR writing circuit 208 is coupled to the control circuit 206 and the DDR storage device 202, and writes (e.g., stores) the data cells in the at least one buffer 200 to the DDR storage device 202 according to DDR addresses.

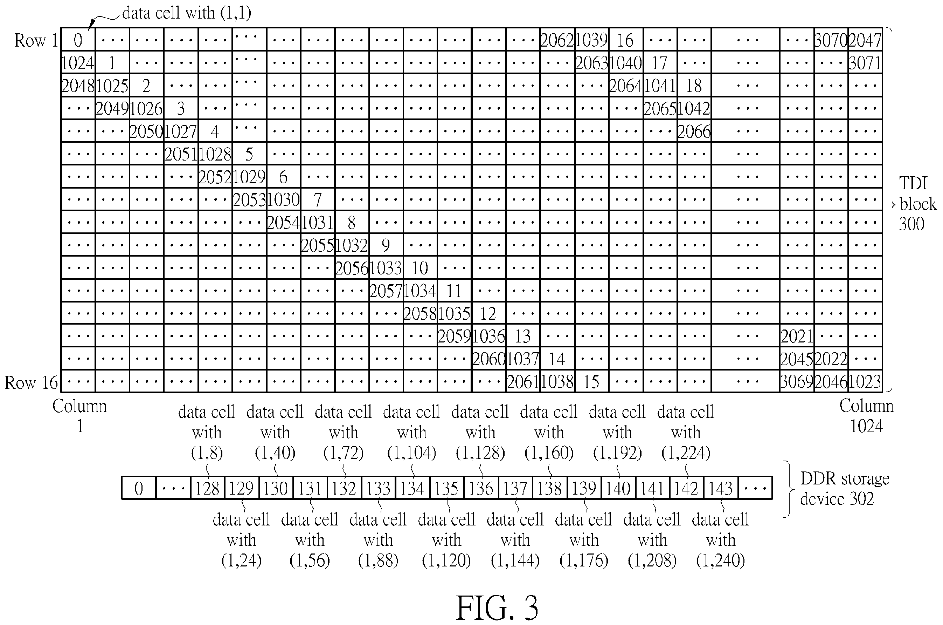

Fig. 3 is a schematic diagram of a TDI block 300 and a DDR storage device 302 according to the present invention. The DDR storage device 302 may be utilized for realizing the DDR storage device 202 of Fig. 2. The TDI block 300 has $N_r$ rows and $N_c$ columns. There are $N_r \times N_c$ data cells in the TDI block 300, and each data cell has a cell number. In Fig. 3, there are 16384 data cells in the TDI block 300 with $N_r$=16 and $N_c$=1024, but is not limited herein.

In the prior art, the DDR writing circuit 208 writes the data cells in the TDI block 300 to the DDR storage device 202 sequentially. For example, the TDI 20 writes data cells in a first row of the TDI block 300 to the DDR storage device 202, and then writes data cells in a second row of the TDI block 300 to the DDR storage device 202, and so on. According to the prior art, writing data cells in a TDI block to a DDR storage device sequentially causes the resource consumption when reading the data cells in the DDR storage device. The detail may be mentioned later.

In the present invention, the buffer writing circuit 204 writes the data cells in the TDI block 300 to the at least one buffer 200 in a more efficient way. An example is illustrated according to Figs 2 and 3 as follows. There are 16 buffers with buffer indices 0-15 in the TDI 20. A data cell with a cell number 0 is written to a buffer with a buffer index 0 (i.e., 0 mod 16 = 0). A data cell with a cell number 18 is written to a buffer with a buffer index 2 (i.e., 18 mod 16 = 2). When the at least one buffer 200 (e.g., the 16 buffers) is full, the DDR writing circuit 208 writes the data cells in the at least one buffer 200 to the DDR storage device 302.

The control circuit 206 generates the DDR addresses according to the TDI addresses. A TDI address (R, C) represents that a data cell is located in the R-th row and the C-th column of the TDI block 300, wherein R and C are positive integers. The control circuit 206 generates the DDR addresses according to the following equation:

$$DDR\ address = N_c \times (R - 1) + \left\lfloor \frac{C}{(N_b \times BUF)} \right\rfloor \times (N_b \times BUF) + (C\ mod\ N_b) \times N_b \times$$

$$\frac{BUF}{8} + \left( \left\lfloor \frac{C}{N_b} \right\rfloor mod\ (N_b \times BUF) \right), \qquad \text{(Eq. 1)}$$

wherein $N_c$ is the number of columns of the TDI block, (R, C) is one of the TDI addresses, $N_b$ is the number of the at least one buffer 200, and BUF is a parameter. BUF is related to a ratio of a capacity of a DDR reading/writing (R/W) and a size of a data cell. Thus, the DDR writing circuit 208 writes the data cells in the at least one buffer 200 to the DDR storage device 302 according to the DDR addresses.

The following example is used for illustrating how the TDI 20 handles the TDI block 300. The TDI block 300 with $N_r$=16 and $N_c$=1024 and the at least one buffer 200 with $N_b$=16 are assumed. A size of a data cell is 32 bits, and the capacity of the DDR R/W is 256 bits. That is, BUF is 256/32=8. First, the buffer writing circuit 204 writes the data cells to the at least one buffer 200, which can be referred to the previous description and is not narrated herein. After the buffer writing circuit 204 writes the data cells to the at least one buffer 200 (e.g., the 16 buffers), the DDR addresses of the data cells can be obtained according to the equation (Eq. 1). Setting $N_b$=16, $N_c$=1024 and BUF=8, the Equation (Eq. 1) can be rewritten as follows:

$$DDR\ address = 1024 \times (R - 1) + \left\lfloor \frac{C}{(16 \times 8)} \right\rfloor \times (16 \times 8) + (C\ mod\ 16) \times 16 + \left\lfloor \frac{C}{16} \right\rfloor.$$

$$\text{(Eq. 2)}$$

Thus, the data cells are written from the at least one buffer 200 to the DDR storage device 302 according to (Eq. 2). For example, a data cell with a TDI address (1, 8) is written to the DDR storage device 302 with a DDR address 128. A data cell with a TDI address (1, 24) is written to the DDR storage device 302 with a DDR address 129. The detail can be referred to the DDR storage device 302 in Fig. 3.

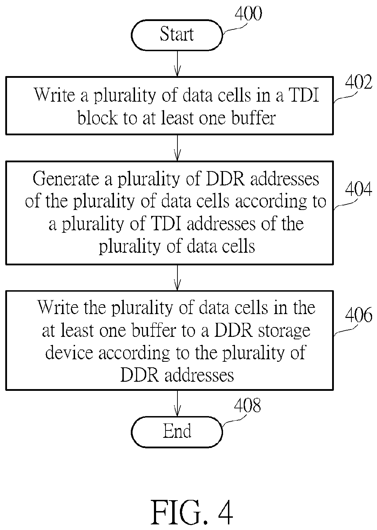

Operations of the TDI 20 in the above examples can be summarized into a process 40 shown in Fig. 4. The process 40 is utilized in the TDI 20, and includes the following steps:

Step 400: Start.
Step 402: Write a plurality of data cells in a TDI block to at least one buffer.
Step 404: Generate a plurality of DDR addresses of the plurality of data cells according to a plurality of TDI addresses of the plurality of data cells.
Step 406: Write the plurality of data cells in the at least one buffer to a DDR storage device according to the plurality of DDR addresses.
Step 408: End.

The process 40 is used for illustrating the operations of the TDI 20. Detailed description and variations of the process 40 can be referred to the previous description, and is not narrated herein.

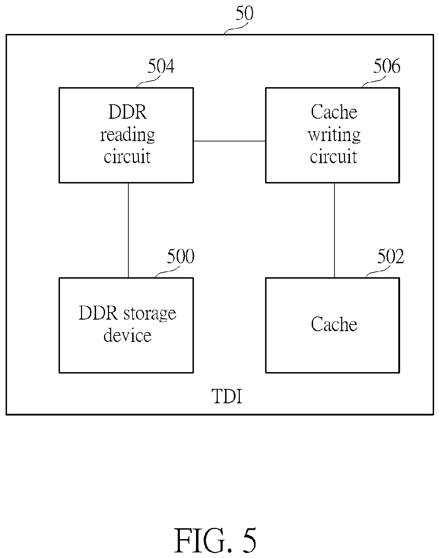

Fig. 5 is a schematic diagram of a time de-interleaver (TDI) 50 according to the present invention. The TDI 50 may be utilized in the receiver RX of Fig. 1, for handling data cells in a DDR storage device. The TDI 50 includes a DDR storage device 500, a cache 502, a DDR reading circuit 504 and a cache writing circuit 506. In detail, the DDR reading circuit 504 is coupled to the DDR storage device 500, and reads a first part of the data cells in the DDR storage device 500. The cache writing circuit 506 is coupled to the DDR reading circuit 504 and the cache 502, and writes (e.g., stores) the first part of the data cells in the DDR storage device 500 to the cache 502. Thus, the receiver RX may obtain the first part of the data cells form the cache 502 instead of the DDR storage device 500, and may process the first part of the data cells.

In one example, the DDR reading circuit 504 reads a second part of the data cells in the DDR storage device 500, e.g., when the first part of the data cells in the cache 502 is not needed for the receiver RX. The cache writing circuit 506 writes (e.g., stores) the second part of the data cells in the DDR storage device 500 to the cache 502. The receiver RX may obtain the second part of the data cells form the cache 502, and may process the second part of the data cells.

In one example, the DDR reading circuit 504 reads the first part of the data cells in the DDR storage device 500 by using a DDR R/W. In one example, after the receiver RX obtains (or processes) the first part of the data cells (e.g., the first part of the data cells in the cache 502 is no longer needed for the receiver RX), the DDR reading circuit 504 reads the second part of the data cells in the DDR storage device 500 by using the DDR R/W. Similarly, after the receiver RX obtains (or processes) the second part of the data cells (e.g., the second part of the data cells in the cache 502 is no longer needed for the receiver RX), the DDR reading circuit 504 reads a third part of the data cells in the DDR storage device 500 by using the DDR R/W.

In one example, the first part of the data cells and the second part of the data cells are not overlapped in the DDR storage device 500. Similarly, the second part of the data cells and the third part of the data cells are not overlapped in the DDR storage device 500. In one example, a capacity of the cache 502 is not smaller than the capacity of the DDR R/W. That is, the minimum capacity of the cache 502 is equal to the capacity of the DDR R/W.

The following example is used for illustrating how the TDI 50 handles the data cells in the DDR storage device 500. A data cell with a size of 32 bits and the DDR R/W with a capacity of 256 bits are assumed. That is, the TDI 50 reads 8 data cells at a time by using the DDR R/W. The minimum capacity of the cache 502 is 256 bits. First, the DDR reading circuit 504 reads 8 data cells of the data cells in the DDR storage device 500 (e.g., the DDR storage device 302 with DDR addresses 128-135) by using the DDR R/W, and the cache writing circuit 506 writes the 8 data cells to the cache 502. That is, the receiver RX may obtain the 8 data cells from the cache 502, and may process the 8 data cells. After the receiver RX processes the 8 data cells, the DDR reading circuit 504 reads other 8 data cells of the data cells in the DDR storage device 500 (e.g., the DDR storage device 302 with DDR addresses 136-143) by using the DDR R/W, and the cache writing circuit 506 writes the other 8 data cells to the cache 502. Thus, the DDR reading circuit 504 needs to read 2048 (i.e., $16 \times 1024/8$) times to read all the data cells in the DDR storage device 500.

In the prior art, the DDR reading circuit 504 reads the data cells in the DDR storage device 500 according to an order of the cell numbers. For example, the DDR reading circuit 504 first reads a data cell with a cell number 0 (i.e., the data cell with a TDI address (1, 1) in the TDI block 300) by reading 8 data cells with TDI addresses (1, 1), (1, 2), ... , (1, 8). The data cell with the TDI address (1, 1) is useful for the receiver RX, while the other 7 data cells are useless. That is, the receiver RX uses only one cell read by the DDR reading circuit 504. Then, the DDR reading circuit 504 reads a data cell with a cell number 1 (i.e., the data cell with a TDI address (2, 2) in the TDI block 300) by reading 8 data cells with TDI addresses (2, 1), (2, 2), ..., (2, 8). Similarly, the data cell with the TDI address (2, 2) is useful for the receiver RX, while the other 7 data cells are useless. Accordingly, in the prior art, the DDR reading circuit 504 needs to read 16384 (i.e., $16 \times 1024$) times to read all the data cells in the DDR storage device 500. According to the present invention, the resource consumption (e.g., the number of TDI reading) is reduced.

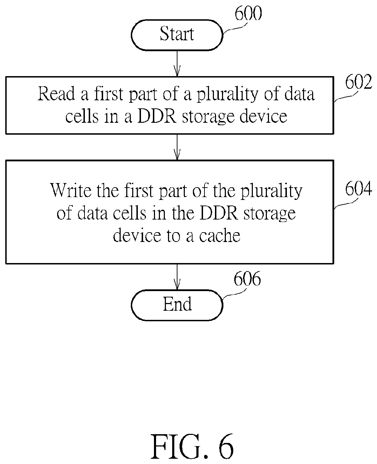

Operations of the TDI 50 in the above examples can be summarized into a process 60 shown in Fig. 6. The process 60 is utilized in the TDI 50, and includes the following steps:

Step 600:    Start.
Step 602:    Read a first part of a plurality of data cells in a DDR storage device.
Step 604:    Write the first part of the plurality of data cells in the DDR storage device to a cache.
Step 606:    End.

The process 60 is used for illustrating the operations of the TDI 50. Detailed description and variations of the process 60 can be referred to the previous description, and is not narrated herein.

It should be noted that realizations of the TDI 20 (including the at least one buffer 200, the DDR storage device 202, the buffer writing circuit 204, the control circuit 206 and the DDR writing circuit 208) and the TDI 50 (including the DDR storage device 500, the cache 502, the DDR reading circuit 504 and the cache writing circuit 506) are various. For example, the circuits mentioned above may be integrated into one or more circuits. In addition, the TDI 20 and the TDI 50 may be realized by hardware (e.g., circuit), software, firmware (known as a combination of a hardware device, computer instructions and data that reside as read-only software on the hardware device), an electronic system or a combination of the devices mentioned above, but is not limited herein.

To sum up, the present invention provides a device for handling a TDI block. According to the present invention, a TDI generates DDR addresses, and writes data cells in a TDI block to a DDR storage device according to the DDR addresses, to reduce the resource consumption. Thus, better efficiency is achieved.

**Claims**

1.  A time de-interleaver, TDI, (20) comprising:

    at least one buffer (200);
    a double data rate, DDR, storage device (202);
    a buffer writing circuit (204), coupled to the at least one buffer (200), for writing a plurality of data cells in a TDI block to the at least one buffer (200) (402);
    a control circuit (206), coupled to the buffer writing circuit (204), for generating a plurality of DDR addresses of the plurality of data cells according to a plurality of TDI addresses of the plurality of data cells according to the following equation:

$$N_c \times (R-1) + \left\lfloor \frac{C}{(N_b \times BUF)} \right\rfloor \times (N_b \times BUF) + (C \bmod N_b) \times N_b \times \frac{BUF}{8}$$

$$+ \left( \left\lfloor \frac{C}{N_b} \right\rfloor \bmod (N_b \times BUF) \right)$$

    wherein $N_c$ is a number of columns of the TDI block, $(R, C)$ is one of the plurality of TDI addresses, $N_b$ is a number of the at least one buffer (200), and *BUF* is a parameter related to a ratio of a capacity of a DDR reading/writing (R/W) and a size of one of the plurality of data cells; and
    a DDR writing circuit (208), coupled to the control circuit (206) and the DDR storage device (202), for writing the plurality of data cells in the at least one buffer (200) to the DDR storage device (202) according to the plurality of DDR addresses (406), when the at least one buffer (200) is full.

**Patentansprüche**

1.  Zeit-Entschachtelungsvorrichtung, TDI, (20), welche umfasst:

    mindestens einen Puffer (200);
    eine Doppeldatenraten-, DDR, Speichervorrichtung (202);
    eine Pufferschreibschaltung (204), die mit dem mindestens einen Puffer (200) gekoppelt ist, zum Schreiben mehrerer Datenzellen in einem TDI-Block in den mindestens einen Puffer (200) (402);
    eine Steuerschaltung (206), die mit der Pufferschreibschaltung (204) gekoppelt ist, zum Erzeugen mehrerer DDR-Adressen der mehreren Datenzellen gemäß mehrerer TDI-Adressen der mehreren Datenzellen gemäß der folgenden Gleichung:

$$N_c \times (R-1) + \left\lfloor \frac{C}{(N_b \times BUF)} \right\rfloor \times (N_b \times BUF) + (C \bmod N_b) \times N_b \times \frac{BUF}{8}$$

$$+ \left( \left\lfloor \frac{C}{N_b} \right\rfloor \bmod (N_b \times BUF) \right)$$

    wobei $N_c$ eine Anzahl von Spalten des TDI-Blocks ist, $(R,C)$ eine der mehreren von TDI-Adressen ist, $N_b$ eine Anzahl des mindestens einen Puffers (200) ist und *BUF* ein Parameter ist, der sich auf ein Verhältnis einer Kapazität eines DDR-Lese-/Schreibvorgangs (R/W) und einer Größe von einer der mehreren Datenzellen bezieht; und
eine DDR-Schreibschaltung (208), die mit der Steuerschaltung (206) und der DDR-Speichervorrichtung (202) gekoppelt ist, zum Schreiben der mehreren Datenzellen in dem mindestens einen Puffer (200) in die DDR-Speichervorrichtung (202) gemäß den mehreren DDR-Adressen (406), wenn der mindestens eine Puffer (200) voll ist.

**Revendications**

1. Dispositif de désentrelacement temporel, TDI, (20) comprenant:

au moins un tampon (200);
un dispositif de mémoire à double débit de données, DDR, (202);
un circuit d'écriture de tampon (204), couplé à l'au moins un tampon (200), pour écrire une pluralité de cellules de données dans un bloc TDI dans l'au moins un tampon (200) (402);
un circuit de commande (206) couplé au circuit d'écriture de tampon (204) pour générer une pluralité d'adresses DDR de la pluralité de cellules de données selon une pluralité d'adresses TDI de la pluralité de cellules de données selon l'équation suivante:

$$N_c \times (R - 1) + \left\lfloor \frac{C}{(N_b \times BUF)} \right\rfloor \times (N_b \times BUF) + (C \bmod N_b) \times N_b \times \frac{BUF}{8}$$

$$+ \left( \left\lfloor \frac{C}{N_b} \right\rfloor \bmod (N_b \times BUF) \right)$$

où $N_c$ est un nombre de colonnes du bloc TDI, (R,C) est l'une de la pluralité d'adresses TDI, $N_b$ est un nombre de la au moins une mémoire tampon (200), et *BUF* est un paramètre se rapportant à un rapport d'une capacité d'une opération de lecture/écriture DDR (R/W) et d'une taille de l'une de la pluralité de cellules de données; et
un circuit d'écriture DDR (208), couplé au circuit de commande (206) et au dispositif de mémoire DDR (202), pour écrire la pluralité de cellules de données dans la au moins une mémoire tampon (200) dans le dispositif de mémoire DDR (202) selon la pluralité d'adresses DDR (406) lorsque la au moins une mémoire tampon (200) est pleine.

10

Transmitter TX

Receiver RX

FIG. 1

FIG. 2

data cell with (1,1)

| Row 1 | 0 | ⋯ | ⋯ | ⋯ | ⋯ | ⋯⋯ | ⋯ | ⋯ | ⋯ | ⋯ | ⋯ | ⋯ | ⋯⋯ | 2062 | 1039 | 16 | ⋯ | ⋯ | ⋯ | ⋯ | 3070 | 2047 |
|---|---|---|---|---|---|---|---|---|---|---|---|---|---|---|---|---|---|---|---|---|---|---|
| | 1024 | 1 | ⋯ | ⋯ | ⋯ | ⋯ | ⋯ | ⋯ | ⋯ | ⋯ | ⋯ | ⋯⋯ | 2063 | 1040 | 17 | ⋯ | ⋯ | ⋯ | ⋯ | 3071 | |
| | 2048 | 1025 | 2 | ⋯ | ⋯ | ⋯ | ⋯ | ⋯ | ⋯ | ⋯ | ⋯⋯ | 2064 | 1041 | 18 | ⋯ | ⋯ | ⋯ | | | | |
| | ⋯ | 2049 | 1026 | 3 | ⋯ | ⋯ | ⋯ | ⋯ | ⋯ | ⋯⋯ | 2065 | 1042 | ⋯ | ⋯ | ⋯ | | | | | | |
| | ⋯ | ⋯ | 2050 | 1027 | 4 | ⋯ | ⋯ | ⋯ | ⋯ | ⋯⋯ | 2066 | ⋯ | | | | | | | | | |
| | ⋯ | ⋯ | ⋯ | 2051 | 1028 | 5 | ⋯ | | | | | | | | | | | | | | |
| | ⋯ | ⋯ | ⋯ | ⋯ | 2052 | 1029 | 6 | ⋯ | | | | | | | | | | | | | |
| | ⋯ | ⋯ | ⋯ | ⋯ | 2053 | 1030 | 7 | ⋯ | | | | | | | | | | | | | |
| | ⋯ | ⋯ | ⋯ | ⋯ | 2054 | 1031 | 8 | ⋯ | | | | | | | | | | | | | |
| | ⋯ | ⋯ | ⋯ | ⋯ | 2055 | 1032 | 9 | ⋯ | | | | | | | | | | | | | |
| | ⋯ | ⋯ | ⋯ | ⋯ | 2056 | 1033 | 10 | ⋯ | | | | | | | | | | | | | |
| | ⋯ | ⋯ | ⋯ | ⋯ | 2057 | 1034 | 11 | ⋯ | | | | | | | | | | | | | |
| | ⋯ | ⋯ | ⋯ | ⋯ | 2058 | 1035 | 12 | ⋯ | | | | | | | | | | | | | |
| | ⋯ | ⋯ | ⋯ | 2059 | 1036 | 13 | ⋯ | ⋯ | ⋯ | 2021 | ⋯ | ⋯ | | | | | | | | | |
| | ⋯ | ⋯ | ⋯ | 2060 | 1037 | 14 | ⋯ | ⋯ | ⋯ | 2045 | 2022 | ⋯ | | | | | | | | | |
| Row 16 | ⋯ | ⋯ | ⋯ | 2061 | 1038 | 15 | ⋯ | ⋯ | ⋯ | 3069 | 2046 | 1023 | | | | | | | | | |

TDI block 300

Column 1

data cell with (1,8)   data cell with (1,40)   data cell with (1,72)   data cell with (1,104)   data cell with (1,128)   data cell with (1,160)   data cell with (1,192)   data cell with (1,224)

Column 1024

| 0 | ⋯ | 128 | 129 | 130 | 131 | 132 | 133 | 134 | 135 | 136 | 137 | 138 | 139 | 140 | 141 | 142 | 143 | ⋯ |
|---|---|---|---|---|---|---|---|---|---|---|---|---|---|---|---|---|---|---|

DDR storage device 302

data cell with (1,24)   data cell with (1,56)   data cell with (1,88)   data cell with (1,120)   data cell with (1,144)   data cell with (1,176)   data cell with (1,208)   data cell with (1,240)

FIG. 3

400

Start

402

Write a plurality of data cells in a TDI block to at least one buffer

404

Generate a plurality of DDR addresses of the plurality of data cells according to a plurality of TDI addresses of the plurality of data cells

406

Write the plurality of data cells in the at least one buffer to a DDR storage device according to the plurality of DDR addresses

408

End

FIG. 4

50

504                                          506

| DDR reading circuit | Cache writing circuit |

500                                          502

| DDR storage device | Cache |

TDI

FIG. 5

Start
*600*

Read a first part of a plurality of data
cells in a DDR storage device
*602*

Write the first part of the plurality
of data cells in the DDR storage
device to a cache
*604*

End
*606*

FIG. 6

**EP 3 699 767 B1**

**Patent documents cited in the description**

- US 2011113305 A1